# EUROPÄISCHE PATENTSCHRIFT

(11) **EP 1 692 010 B1**
(45) Veröffentlichungstag und Bekanntmachung des Hinweises auf die Patenterteilung: **18.07.2007**
(21) Anmeldenummer: 04798186.5
(22) Anmeldetag: 09.11.2004
(51) Int. Cl.: B60R 11/02, H05K 7/14

(54) **ADAPTERSYSTEM**
ADAPTER SYSTEM
SYSTEME ADAPTATEUR

(30) Priorität: 10.12.2003 DE 10357799
(43) Veröffentlichungstag der Anmeldung: 23.08.2006
(73) Patentinhaber: SIEMENS AKTIENGESELLSCHAFT, 80333 München (DE)
(72) Erfinder: KIRNER, Herbert, 78052 Villingen-Schwenningen (DE)
(86) Internationale Anmeldenummer: PCT/EP2004/052878
(87) Internationale Veröffentlichungsnummer: WO 2005/056339

(56) Entgegenhaltungen:
- EP-A- 1 000 808
- DE-A- 3 824 301

## Beschreibung

Die Erfindung betrifft ein Adaptersystem zum Einbau eines Einbaugerätes in einen Einbauraum, wobei der Einbauraum insbesondere ein Einbauraum eines für den Fronteinbau vorgesehenen Einbaugerätes in einem Kraftfahrzeug ist.

Aus der gattungsbildenden EP 1 000 808 A1 sind Montageelemente zur Positionierung und Fixierung eines Autoradios in einem Einbauraum bekannt, die auf der linken und rechten Seite des Autoradios befestigt sind. Die Montageelemente weisen obere und untere Biegeelemente auf, die das Autoradio oben bzw. unten umgreifen und eine Bewegung des Autoradios in vertikaler Richtung zum Einbauraum verhindern. An der Vorderseite des Autoradios weisen die Montageelemente seitlich nach außen zeigende Biegeelemente auf, die jeweils eine Kante des Einbauraums umgreifen und somit eine Querbewegung des Autoradios verhindern.

Die DE 38 24 301 A1 offenbart eine Halterung für in Kraftfahrzeuge einbaubare Zusatzgeräte, die zwei Halteelemente aufweist, die mittels Haltenasen mit einer Seitenwand eines Einbauschachtes verrastet werden. Das Zusatzgerät wird nach dem Einsetzen der Halteelemente in den Einbauschacht an den Halteelementen befestigt.

Adaptersysteme finden heute in nahezu jedem Kraftfahrzeug zum Einbau des Autoradios Anwendung. Die Abmessungen des Einbauraums orientieren sich hierbei üblicherweise an der DIN ISO 7736, welche außerdem Möglichkeiten der Befestigung des Einbaugerätes in dem Einbauraum vorschlägt. Bevorzugt sind eine so genannte vordere Befestigung und eine so genannte seitliche Befestigung, bei welcher jeweils regelmäßig an dem Adaptersystem vorgesehene, elastisch federnde Vorsprünge in mit diesen korrespondierenden Ausnehmungen an den den Einbauraum begrenzenden Flächen einrasten. Zusätzlich kann eine hintere Befestigung mittels eines Gewindebolzens erfolgen. Die neue digitale Generation von Tachographen wird nicht mehr, wie der mechanische Vorgänger, in einer runden Einbauform im Kraftfahrzeug untergebracht sondern in einem Einbauraum gemäß erwähnter Norm. Einerseits sind für den Einbau in derartige Einbauräume bekannte Adaptersysteme, insbesondere für Autoradios, aufgrund der Abmaße und Toleranzen in der Herstellung als Stanz-Biegeteil aufwendig und kostenintensiv und darüber hinaus zur Lagerung des aufwendigen und empfindlichen Tachographen nur eingeschränkt geeignet. Darüber hinaus würde der Einbau des digitalen Tachographen mittels eines bekannten Adaptersystems aufgrund der Abmaße des Gerätes die eigentlich optionale hintere Befestigung unabdingbar machen, so dass sich der Montageaufwand ungebührlich erhöht.

Die Erfindung hat es sich daher zur Aufgabe gemacht, ein Adaptersystem zu schaffen, welches insbesondere für den Einbau von Einbaugeräten in den von der DIN ISO 7736 beschriebenen Einbauraum unter zuverlässigem Ausgleich der maßlichen Differenzen zwischen dem Einbauraum und dem Einbaugerät bei gleichzeitig minimiertem Herstellungs- und Montageaufwand und einem besonders hohen Maß an Stabilität ermöglicht.

Zur Lösung der Aufgabe wird erfindungsgemäß ein Adaptersystem nach Anspruch 1 vorgeschlagen.

Ein entscheidender Vorteil des erfindungsgemäßen Adaptersystems liegt in der Aufspaltung in zwei getrennte Teilelemente, wodurch die beiden Teilelemente unabhängig voneinander das jeweilige Spiel zwischen dem Einbaugerät und dem Einbauraum überbrücken können. Auf diese Weise werden etwaige Kräfte von dem einen Teilelement nicht ungünstig auf die gegenüberliegende Seite des anderen Teilelementes übertragen, so dass auch nicht, wie im Stand der Technik häufig geschehen, große Fügekräfte zur Verformung oder sogar Verwindung des Einbaugerätes oder des Einbauraumes führen. Das Adaptersystem, bestehend aus den beiden Teilelementen, kann darüber hinaus wesentlich kleinformatiger ausgebildet sein als bisherige Adaptersysteme, die üblicherweise die Abmessungen des Einbaugerätes haben. Eine Optimierung der Ausgleichselemente der Teilelemente auf bestimmte Einbausituationen kann gemäß der Erfindung bereits werkseitig erfolgen und die Teilelemente können bereits vor der Auslieferung an den Kunden an das Einbaugerät angebracht werden.

Zusätzliche Sicherheit gegen aus ungewolltem Spiel resultierende Schwingungen kann das erfindungsgemäße Adaptersystem bieten, wenn jedes Teilelement das Einbaugerät an mindestens drei Seiten berührend U-förmig umfasst. Da die Einbaugeräte gemäß der genannten Norm als flache Quader ausgebildet sind, ist es sinnvoll, wenn jedes der beiden Teilelemente das Einbaugerät an einer der beiden seitlichen Seiten unter Berührung der Oberseite und der Unterseite umfasst.

Damit dem Einbaugerät jeglicher Freiheitsgrad der ungewollten Bewegung genommen wird, ist es zweckmäßig, wenn die Ausgleichselemente an den Teilelementen Anlagebereiche aufweisen, welche an den Anlageflächen des Einbauraumes und an einer Seite des Einbaugerätes anliegen und das dortige Spiel zwischen dem Einbaugerät und dem Einbauraum ausgleichen, im einzelnen jeweils mindestens einen seitlichen Anlagebereich zur Anlage an einer seitlichen Begrenzungsfläche, jeweils mindestens einen oberen Anlagebereich zur Anlage an einer oberen Begrenzungsfläche und jeweils mindestens einen unteren Anlagebereich zur Anlage einer der unteren Begrenzungsfläche aufweisen. Eine weitere Stabilisierung, insbesondere gegen ungewollte Drehbewegungen, erhält das Einbaugerät, wenn die Teilelemente in Tiefenrichtung des Einbaugerätes jeweils zwei hintereinander angeordnete seitliche, obere und/oder untere Anlagebereiche und/oder Ausgleichselemente aufweisen.

Mit Vorteil kann eine spielfreie Lagerung erreicht werden, indem die Ausgleichselemente zumindest zum Teil in ihrer Erstreckung zwischen der Begrenzungsfläche des Einbauraumes und der Seite des Einbaugerätes elastisch ausgebildet sind. Auf diese Weise kann zusätzlich eine Dämpfung von unerwünschten Schwingungen erreicht werden. Die Abstufung für unterschiedliche Spiele zwischen den Einbaugeräten und dem Einbauraum kann maßlich bei elastischer Ausbildung der Ausgleichselemente gröber dimensioniert werden, so dass sich der Lageraufwand erheblich reduziert.

Eine besonders einfache Montage der Teilelemente ergibt sich, wenn die Teilelemente das Einbaugerät elastisch federnd umgreifen. Vergleichbare Resultate lassen sich erzielen, wenn die Teilelemente an dem Einbaugerät verrastet, angeflanscht oder vernietet sind. Fertigungskosten und Fertigungsaufwand werden erheblich reduziert, wenn die Teilelemente aus Kunststoff bestehen. Darüber hinaus weist Kunststoff, insbesondere im Vergleich zu Metall, hervorragende Dämpfungseigenschaften auf.

Mit Vorteil lässt sich das Adaptersystem gemäß der Erfindung mit einem handelsüblichen und vielfach bewährten Befestigungselement, mittels welchem das Einbaugerät in dem Einbauraum verankert werden kann, kombinieren. Hierzu kann jeweils ein handelsübliches Befestigungselement an jeweils einem auf einer Seite anzubringenden erfindungsgemäßen Teilelement des Adaptersystems, beispielsweise mittels einer Schraub- oder Rastverbindung angebracht werden. Dabei ist es auch denkbar, dass das Teilelement einstückig mit dem entsprechenden Befestigungselement ausgebildet ist, beispielsweise an das regelmäßig aus Metall ausgeführte Befestigungselement angespritzt ist. Mit Vorteil kann auch das Teilelement als metallisches Stanz-Biegeteil einstückig mit dem Befestigungselement ausgebildet sein.

Eine besonders fehlerfreie Montage und ein reduzierter Lageraufwand ergibt sich, wenn die Teilelemente zu einer Tiefenebene des Einbauraumes symmetrisch ausgebildet sind, so dass die nach vorne weisende Hälfte spiegelsymmetrisch zu der in die Tiefe des Einbauraumes weisenden Hälfte ausgebildet ist. Auf diese Weise lassen sich auf der einen Seite anzubringende Teilelemente identisch mit denjenigen auf der gegenüberliegenden Seite befindlichen Teilelementen ausbilden.

Eine beschädigungsfreie Montage wird wesentlich erleichtert, wenn jedes Teilelement an den in Tiefenrichtung des Einbauraumes führenden Kanten mit Einführschräge versehen ist.

Im Folgenden ist die Erfindung anhand von Ausführungsbeispielen unter Bezugnahme auf Zeichnungen zur Verdeutlichung näher beschrieben. Für den Fachmann ergeben sich aus der Erfindung weitere Möglichkeiten der Ausführung. Es zeigen:
- Fig. 1:: eine perspektivische Darstellung eines Einbauraumes nach DIN ISO 7736,
- Fig. 2:: eine perspektivische Darstellung eines Einbaugerätes aus der Sicht von vorne,
- Fig. 3:: eine perspektivische Darstellung eines Einbaugerätes aus der Sicht von hinten,
- Fig. 4:: eine perspektivische Explosionsdarstellung eines Einbaugerätes mit einem Teilelement eines erfindungsgemäßen Adaptersystems und einem Befestigungselement,

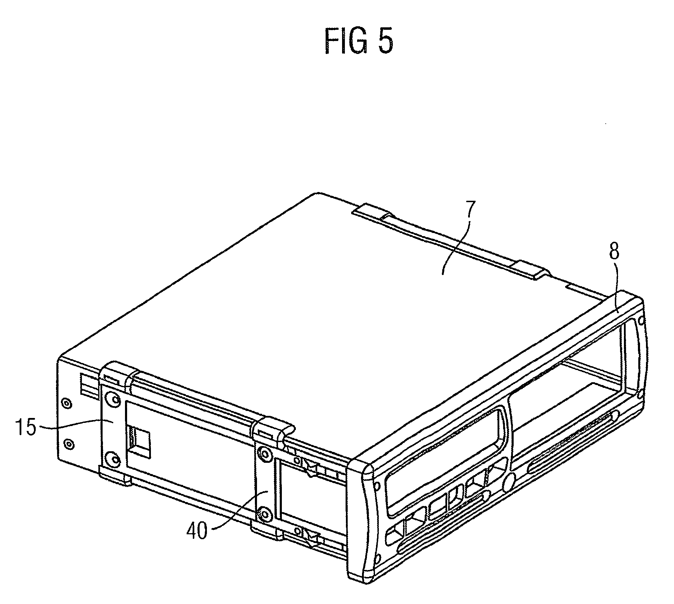

- Fig. 5:: eine perspektivische Zusammenstellung eines Einbaugerätes mit einem angebrachten erfindungsgemäßen Adaptersystem,
- Fig. 6, 7:: jeweils eine perspektivische Darstellung eines Teilelementes eines erfindungsgemäßen Adaptersystems,
- Fig. 8, 9:: jeweils eine perspektivische Darstellung einer zweiten Ausführungsform eines Teilelementes eines erfindungsgemäßen Adaptersystems,
- Fig. 10:: eine perspektivische Zusammenstellung eines Einbaugerätes mit einem erfindungsgemäßen Adaptersystem in der Art der zweiten Ausführungsform.

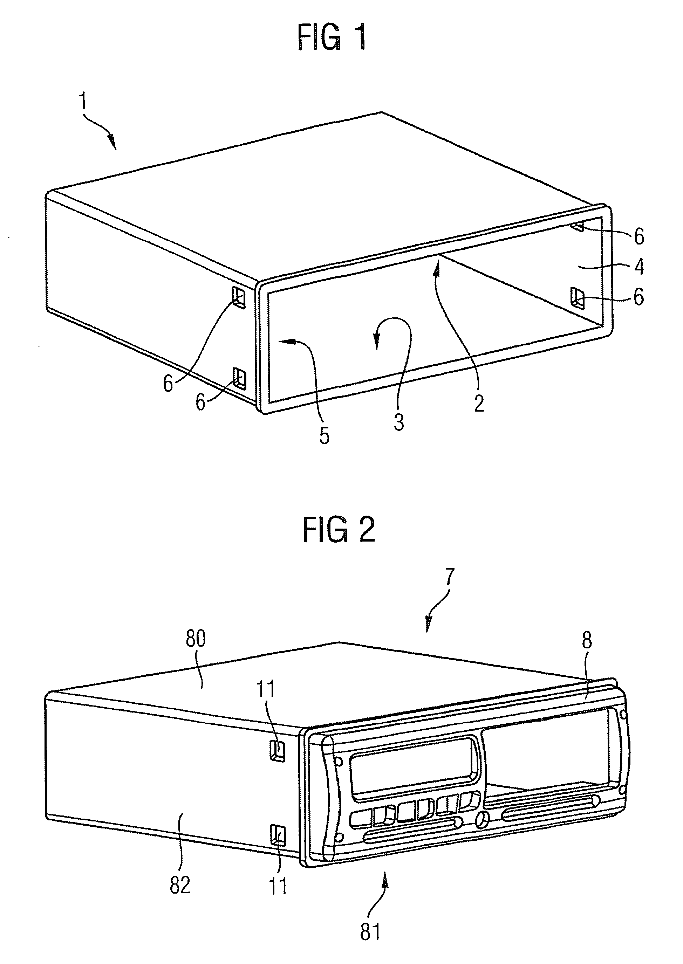

Fig. 1 zeigt einen Einbauraum 1, wie ihn die DIN ISO 7736 für die Aufnahme von Fronteinbaugeräten vorsieht. Der Einbauraum 1 weist eine obere Begrenzungsfläche 2, eine untere Begrenzungsfläche 3, eine rechte seitliche Begrenzungsfläche 4 und eine linke seitliche Begrenzungsfläche 5 auf. Eingangsseitig sind die linke seitliche Begrenzungsfläche 5 und die rechte seitliche Begrenzungsfläche 4 mit jeweils zwei Öffnungen 6 für nicht dargestellte Befestigungselemente versehen.

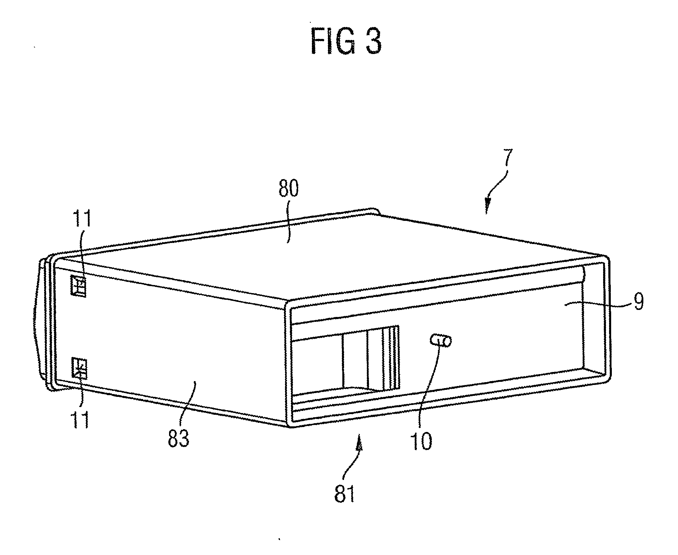

Die Figuren 2 und 3 zeigen jeweils perspektivisch ein Einbaugerät 7 aus der Sicht von vorne bzw. aus der Sicht von hinten. Frontseitig weist das Einbaugerät 7 eine Frontblende 8 auf, welche mit verschiedenen, hier nicht dargestellten Funktionselementen versehen ist. Rechtwinklig schließen sich an die Frontblende 8 eine Oberseite 80, Unterseite 81, linke Seite 82 und eine rechte Seite 83 an, welche mit einer Rückseite 9 die quaderförmige Außenkontur des Einbaugerätes festlegen. Die gegenüber der Frontblende 8 befindliche Rückseite 9 des Einbaugerätes 7 weist mittig einen Gewindebolzen 10 zur Befestigung an einer gemäß DIN ISO 7736 vorgesehenen Öffnung auf. Korrespondierend zu den Öffnungen 6 an dem Einbauraum 1 ist das Einbaugerät 7 mit Ausnehmungen 11 auf der linken und auf der rechten Seite 82, 83 versehen.

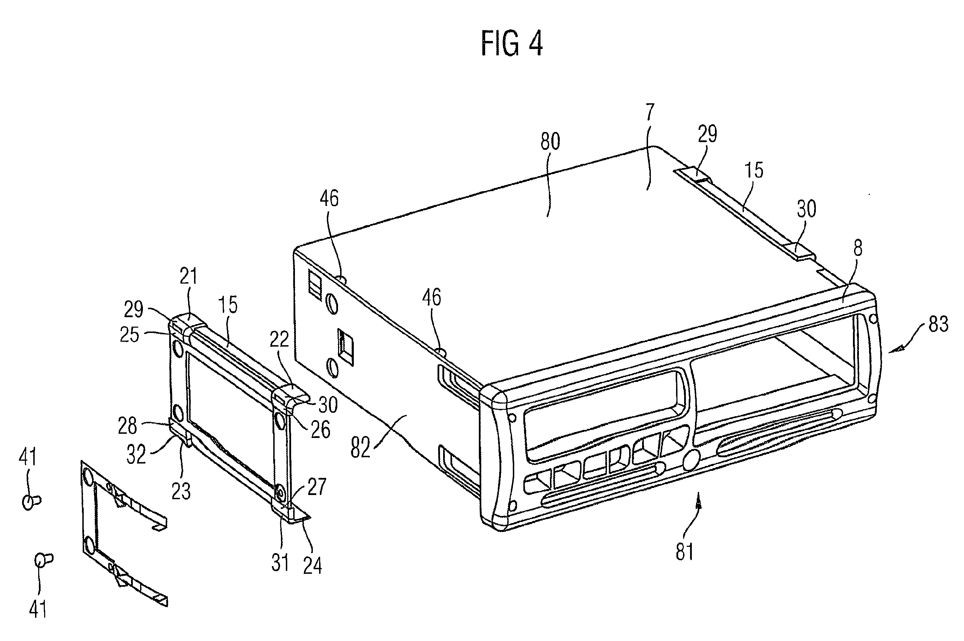

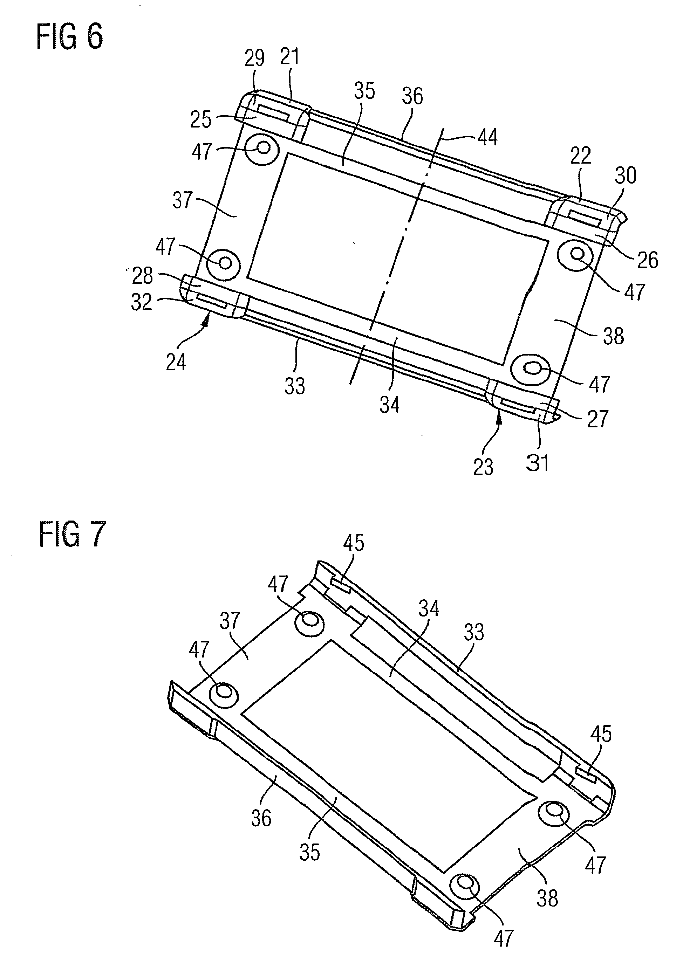

Fig. 4 zeigt, wie an zwei gegenüberliegenden Seiten, der linken Seite 82 und der rechten Seite 83 des Einbaugerätes 7 erfindungsgemäße Teilelemente 15 angebracht werden. Jedes Teilelement 15 umfasst das Einbaugerät 7 an der jeweiligen Seite 82, 83 unter Berührung der Seite 82, 83 und der daran rechtwinklig angrenzenden Oberseite 80 und Unterseite 81. Das Teilelement 15 berührt das Einbaugerät 7 an den jeweiligen Seiten 80, 81, 82, 83 in einem Anlagebereich 21-28 mit einem Ausgleichselement 29, 30, 31, 32. Jedes der beiden Teilelemente 15, wie auch aus Fig. 6, 7 erkennbar, weist zwei nach oben weisende Anlagebereiche 21, 22, zwei nach unten weisende Anlagebereiche 23, 24 und vier seitliche Anlagebereiche 25-28 auf, wobei jeweils ein oberer Anlagebereich 21, 22 bzw. unterer Anlagebereich 23, 24 gemeinsam mit einem seitlichen Anlagebereich 25-28 Bestandteil eines von vier Ausgleichselementen 29-32 ist. Die Ausgleichselemente 29-32 legen sich jeweils L-förmig um eine Kante des Einbaugerätes 7 und stehen mittels horizontalen Stegen 33-36 und vertikalen Stegen 37, 38 jeweils ein Teilelement 15 bildend untereinander in Verbindung.

Gemeinsam mit einem handelsüblichen Befestigungselement 40 sind die Teilelemente 15 gemäß der in Fig. 4 dargestellten Ausführungsform der Erfindung mittels Schrauben 41 an dem Einbaugerät 7 befestigt. Die Ausgleichselemente 29-32 sind in ihren Maßen so gestaltet, dass ihre Dicke das Spiel zwischen dem Einbaugerät 7 und dem Einbauraum 1 in der Summe sowohl horizontal als auch vertikal überbrückt. Die Verbindung der Ausgleichselemente 29-32 mittels der Stege 33-38 stellt sicher, dass sich die Ausgleichselemente 29-32 in zwei unterschiedlichen Tiefenebenen 42, 43 befinden, so dass ungewollte Freiheitsgrade der Drehung des Einbaugerätes 7 in dem Einbauraum 1 vermieden werden. Die Teilelemente 15 sind für beide Seiten des Einbaugerätes 7 identisch ausgebildet und zu einer mittleren Tiefenebene 44 der Teilelemente 15 spiegelsymmetrisch. Die Teilelemente 15 sind zur Befestigung an dem Einbaugerät 7 mit Rastnasen 45 versehen, welche in Ausnehmungen 46 des Einbaugerätes 7 einrastbar ausgebildet sind. Bohrungen 47 in den Teilelementen 15 dienen der Befestigung des Befestigungselementes 40 unter gleichzeitiger Befestigung an dem Einbaugerät 7 an dem Teilelement 15.

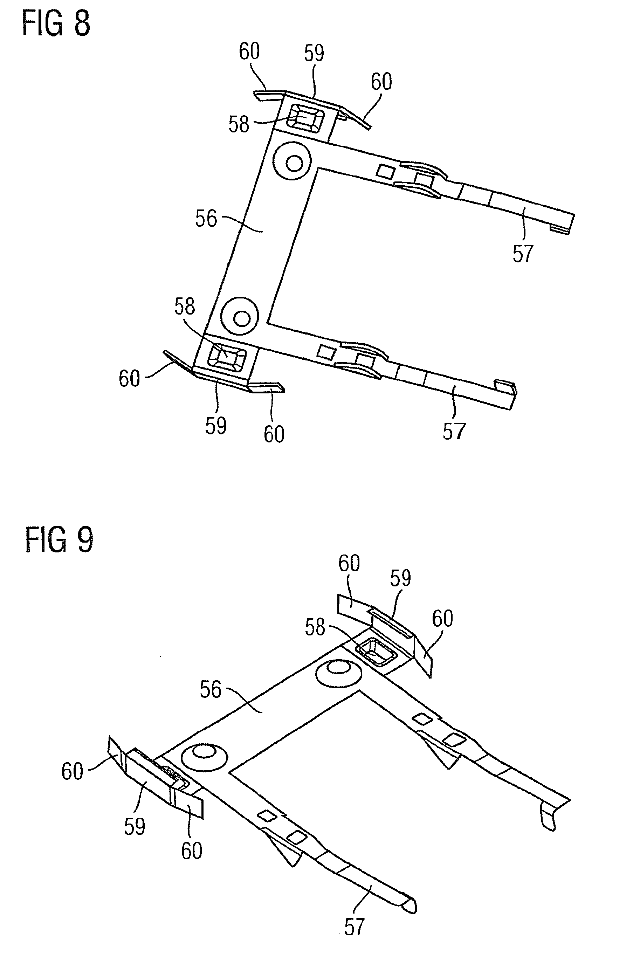

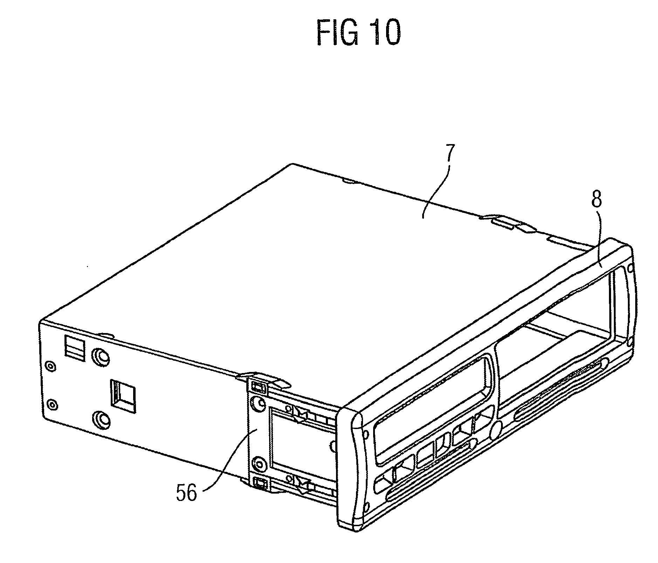

Die Figuren 8, 9 und 10 zeigen eine zweite Ausführungsform eines Teilelementes 56 einstückig mit einem Befestigungselement 57. Seitliche Ausgleichselemente 58 überbrücken das horizontale Spiel des Einbaugerätes 7 zu dem Einbauraum 1 und obere bzw. untere Ausgleichselemente 59, 60 überbrücken das vertikale Spiel. Diese metallischen Teilelemente 56 sind mit Einführschrägen 60 zur leichteren Montage und Demontage versehen.

## Patentansprüche

1. Adaptersystem zum Einbau eines Einbaugerätes (7) in einen Einbauraum (1), wobei der Einbauraum (1) insbesondere ein Einbauraum (1) eines für den Fronteinbau vorgesehenen Einbaugerätes (7) in einem Kraftfahrzeug ist, mit
- mindestens zwei getrennten Teilelementen (15), die an zwei gegenüberliegenden Seiten (80-83) des Einbaugerätes angeordnet sind und das Einbaugerät (7) jeweils U-förmig umfassen, und
- mit Ausgleichselementen (29-32), die Teil der Teilelemente (15) sind und die das vertikale Spiel zwischen den Einbauraum (1) in der Höhe begrenzenden ersten Begrenzungsflächen (2, 3) und dem Einbaugerät (7) ausgleichen und das horizontale Spiel zwischen den Einbauraum (1) in der Breite begrenzenden zweiten Begrenzungsflächen (4, 5) und dem Einbaugerät (7) ausgleichen,
**dadurch gekennzeichnet, dass**
die Ausgleichselemente (29-32) jeweils einen oberen (21, 22) bzw. einen unteren (23, 24) Anlagebereich gemeinsam mit einem seitlichen (25-28) Anlagebereich aufweisen, wobei sich die Ausgleichselemente (19-32) jeweils L-förmig um eine Kante des Einbaugerätes (7) legen und der obere bzw. untere Anlagebereich (21, 22) zur Anlage an einer der ersten Begrenzungsflächen (2, 3) und der seitliche Anlagebereich (23, 24) zur Anlage an einer der zweiten Begrenzungsflächen (4, 5) dient und wobei die Ausgleichselemente (29-32) in ihren Maßen so gestaltet sind, dass ihre Dicke das Spiel zwischen dem Einbaugerät (7) und dem Einbauraum (1) in der Summe sowohl horizontal als auch vertikal überbrückt.

2. Adaptersystem nach Anspruch 1, **dadurch gekennzeichnet, dass** jedes Teilelement (15) das Einbaugerät (7) an mindestens drei Seiten (80-83) berührend U-förmig umfasst.

3. Adaptersystem nach einem der Ansprüche 1 oder 2, **dadurch gekennzeichnet, dass** jedes der mindestens zwei Teilelemente (15) das Einbaugerät (7) an einer der beiden seitlichen Seiten (82, 83) unter Berührung der Oberseite (80) und der Unterseite (81) umfasst.

4. Adaptersystem nach einem der vorhergehenden Ansprüche, **dadurch gekennzeichnet, dass** die Ausgleichselemente (29-32) untereinander mittels horizontalen Stegen (33-36) und vertikalen Stegen (37, 38) jeweils ein Teilelement (15) bildend in Verbindung stehen.

5. Adaptersystem nach einem der vorhergehenden Ansprüche, **dadurch gekennzeichnet, dass** die Ausgleichselemente (29-32) zumindest zum Teil in ihrer Erstreckung zwischen der Begrenzungs'fläche (2-5) des Einbauraumes (1) und der Seite (80-83) des Einbaugerätes (7) elastisch ausgebildet sind.

6. Adaptersystem nach einem der vorhergehenden Ansprüche, **dadurch gekennzeichnet, dass** die Teilelemente (15) das Einbaugerät (7) elastisch federnd umgreifen.

7. Adaptersystem nach einem der vorhergehenden Ansprüche, **dadurch gekennzeichnet, dass** die Teilelemente (15) an dem Einbaugerät (7) verrastet, angeflanscht oder vernietet sind.

8. Adaptersystem nach einem der vorhergehenden Ansprüche, **dadurch gekennzeichnet, dass** die Teilelemente (15) in Tiefenrichtung des Einbaugerätes (7) jeweils zwei hintereinander angeordnete seitliche, obere und untere Anlagebereiche (21-28) aufweisen.

9. Adaptersystem nach einem der vorhergehenden Ansprüche, **dadurch gekennzeichnet, dass** die Teilelemente (15) aus Kunststoff bestehen.

10. Adaptersystem nach einem der vorhergehenden Ansprüche, **dadurch gekennzeichnet, dass** die Teilelemente (15) aus Metall bestehen.

11. Adaptersystem nach einem der vorhergehenden Ansprüche, **dadurch gekennzeichnet, dass** die Teilelemente (15) jeweils mit einem Befestigungselement (40) in Verbindung stehen, mittels welchem das Einbaugerät (7) in dem Einbauraum (1) verankert ist.

12. Adaptersystem nach einem der vorhergehenden Ansprüche, **dadurch gekennzeichnet, dass** das Befestigungselement (40) einstückig mit dem Teilelement (15) ausgebildet ist.

13. Adaptersystem nach einem der vorhergehenden Ansprüche, **dadurch gekennzeichnet, dass** die Teilelemente (15) zu einer Tiefenebene (44) des Einbauraumes (1) symmetrisch ausgebildet sind, so dass die nach vorne weisende Hälfte spiegelsymmetrisch zu der in die Tiefe des Einbauraumes (1) weisenden Hälfte ausgebildet ist.

14. Adaptersystem nach einem der vorhergehenden Ansprüche, **dadurch gekennzeichnet, dass** jedes Teilelement (15) an den in Tiefenrichtung des Einbauraumes (1) führenden Kanten mit Einführschrägen (60) versehen ist.

## Claims

1. Adapter system for installing a built-in device (7) in an installation space (1), the installation space (1) in particular being an installation space (1) for a built-in device (7), which is provided for front installation, in a motor vehicle, with
- at least two separate partial elements (15) which are arranged on two opposite sides (80-83) of the built-in device and in each case embrace the built-in device (7) in a U-shaped manner, and
- with compensating elements (29-32) which are part of the partial elements (15) and which compensate for the vertical play between the first boundary surfaces (2, 3) bounding the installation space (1) vertically and the built-in device (7) and compensate for the horizontal play between second boundary surfaces (4, 5) bounding the installation space (1) widthwise and the built-in device (7), **characterized in that** the compensating elements (29-32) each have an upper bearing region (21, 22) and a lower bearing region (23, 24) together with a lateral bearing region (25-28), the compensating elements (19-32) in each case being positioned in an L-shaped manner around an edge of the built-in device (7), and the upper or lower bearing region (21, 22) serving for bearing against one of the first boundary surfaces (2, 3) and the lateral bearing region (23, 24) serving for bearing against one of the second boundary surfaces (4, 5) and the compensating elements (29-32) being designed in their dimensions in such a manner that their thickness spans the play between the built-in device (7) and the installation space (1) in total both horizontally and vertically.

2. Adapter system according to claim 1, **characterized in that** each partial element (15) embraces the built-in device (7) in a U-shaped manner touching it on at least three sides (80-83).

3. Adapter system according to either one of claims 1 and 2, **characterized in that** each of the at least two partial elements (15) embraces the built-in device (7) on one of the two lateral sides (82, 83) while touching the upper side (80) and the lower side (81).

4. Adapter system according to one of the preceding claims, **characterized in that** the compensating elements (29-32) are connected to one another, in each case forming a partial element (15), by means of horizontal webs (33-36) and vertical webs (37, 38).

5. Adapter system according to one of the preceding claims, **characterized in that** the compensating elements (29-32) are of elastic design at least partly in their extent between the boundary surface (2-5) of the installation space (1) and the side (80-83) of the built-in device (7).

6. Adapter system according to one of the preceding claims, **characterized in that** the partial elements (15) engage in an elastically resilient manner around the built-in device (7).

7. Adapter system according to one of the preceding claims, **characterized in that** the partial elements (15) are latched, flanged or riveted to the built-in device (7).

8. Adapter system according to one of the preceding claims, **characterized in that**, in the depth direction of the built-in device (7), the partial elements (15) in each case have two consecutively arranged lateral, upper and lower bearing regions (21-28).

9. Adapter system according to one of the preceding claims, **characterized in that** the partial elements (15) are made from plastic.

10. Adapter system according to one of the preceding claims, **characterized in that** the partial elements (15) are made from metal.

11. Adapter system according to one of the preceding claims, **characterized in that** the partial elements (15) are in each case connected to a fastening element (40) by means of which the built-in device (7) is secured in the installation space (1).

12. Adapter system according to one of the preceding claims, **characterized in that** the fastening element (40) is formed integrally with the partial element (15).

13. Adapter system according to one of the preceding claims, **characterized in that** the partial elements (15) are formed symmetrically with respect to a depth plane (44) of the installation space (1), so that the forwardly pointing half is formed mirror-symmetrically to the half pointing into the depth of the installation space (1).

14. Adapter system according to one of the preceding claims, **characterized in that** each partial element (15) is provided with introducing slopes (60) on the edges leading in the depth direction of the installation space (1).

## Revendications

1. Système adaptateur permettant de monter un appareil à encastrer (7) dans un logement d'encastrement (1), où le logement d'encastrement (1) est, notamment, un logement d'encastrement (1) d'un appareil à encastrer (7) prévu pour une installation frontale dans un véhicule automobile, comportant
- au moins deux éléments partiels séparés (15) qui sont disposés sur deux faces opposées (80-83) de l'appareil à encastrer et qui enserrent chacun l'appareil à encastrer (7) en forme de U et
- des éléments de compensation (29-32), qui font partie des éléments partiels (15) et qui compensent le jeu vertical entre des premières surfaces de limitation (2, 3) limitant le logement d'encastrement (1) dans le sens de la hauteur et l'appareil à encastrer (7) et le jeu horizontal entre des deuxièmes surfaces de limitation (4, 5) limitant le logement d'encastrement (1) dans le sens de la largeur et l'appareil à encastrer (7),
**caractérisé par le fait que**
les éléments de compensation (29-32) ont chacun une zone d'appui supérieure (21, 22) et, respectivement, une zone d'appui inférieure (23, 24) en commun avec une zone d'appui latérale (25-28), les éléments de compensation (29-32) s'appliquant chacun en forme de L autour d'une arête de l'appareil à encastrer (7) et la zone d'appui supérieure et, respectivement, la zone d'appui inférieure (21, 22) servant à s'appliquer sur l'une des premières surfaces de limitation (2, 3) et la zone d'appui latérale (23, 24) servant à s'appliquer sur l'une des deuxièmes surfaces de limitation (4, 5) et les dimensions des éléments de compensation (29-32) étant conçues de manière telle que leur épaisseur surmonte en totalité le jeu entre l'appareil à encastrer (7) et le logement d'encastrement (1) aussi bien dans le sens horizontal que dans le sens vertical.

2. Système adaptateur selon la revendication 1, **caracté- risé par le fait que** chaque élément partiel (15) enserre en forme de U l'appareil à encastrer (7) sur au moins trois faces (80-83) en y étant en contact.

3. Système adaptateur selon l'une des revendications 1 ou 2, **caractérisé par le fait que** chacun des au moins deux éléments partiels (15) enserre l'appareil à encastrer (7) sur l'une des deux faces latérales (82, 83) en étant en contact sur la face supérieure (80) et sur la face inférieure (81).

4. Système adaptateur selon l'une des revendications précédentes, **caractérisé par le fait que** les éléments de compensation (29-32) sont liés l'un à l'autre au moyen de barrettes horizontales (33-36) et de barrettes verticales (37, 38) et forment chacun un élément partiel (15).

5. Système adaptateur selon l'une des revendications précédentes, **caractérisé par le fait que** les éléments de compensation (29-32) sont au moins en partie élastiques dans le sens de leur étendue entre la surface de limitation (2-5) du logement d'encastrement (1) et la face (80-83) de l'appareil à encastrer (7).

6. Système adaptateur selon l'une des revendications précédentes, **caractérisé par le fait que** les éléments partiels (15) enserrent l'appareil à encastrer (7) d'une façon élastique en faisant ressort.

7. Système adaptateur selon l'une des revendications précédentes, **caractérisé par le fait que** les éléments partiels (15) sont encliquetés, bridés ou rivetés sur l'appareil à encastrer (7).

8. Système adaptateur selon l'une des revendications précédentes, **caractérisé par le fait que** les éléments partiels (15) comportent chacun, dans le sens de la profondeur de l'appareil à encastrer (7), deux zones d'appui latérales, supérieures et inférieures (21-28) disposées l'une derrière l'autre.

9. Système adaptateur selon l'une des revendications précédentes, **caractérisé par le fait que** les éléments partiels (15) sont en matière plastique.

10. Système adaptateur selon l'une des revendications précédentes, **caractérisé par le fait que** les éléments partiels (15) sont en métal.

11. Système adaptateur selon l'une des revendications précédentes, **caractérisé par le fait que** les éléments partiels (15) sont chacun en liaison avec un élément de fixation (40), au moyen duquel l'appareil à encastrer (7) est ancré dans le logement d'encastrement (1).

12. Système adaptateur selon l'une des revendications précédentes, **caractérisé par le fait que** l'élément de fixation (40) est conçu pour former une pièce unique avec l'élément partiel (15).

13. Système adaptateur selon l'une des revendications précédentes, **caractérisé par le fait que** les éléments partiels (15) sont conçus symétriquement par rapport à un plan en profondeur (44) du logement d'encastrement (1), si bien que la moitié tournée vers l'avant est inversement symétrique par rapport à la moitié tournée vers la profondeur du logement d'encastrement (1).

14. Système adaptateur selon l'une des revendications précédentes, **caractérisé par le fait que** chaque élément partiel (15) est doté de biseaux d'introduction (60) sur les arêtes conduisant dans la direction de la profondeur du logement d'encastrement (1).
